# EUROPEAN PATENT APPLICATION

(11) **EP 2 426 061 A1**
(43) Date of publication of application: **07.03.2012**
(21) Application number: 10175137.8
(22) Date of filing: 02.09.2010
(51) Int. Cl.: B65D 63/10, D03D 15/00, D04H 3/04, D04H 3/14, D06M 10/02

(54) **Geogrid, non-woven or woven fabric and strapping band**

(71) Applicant: baumhueter extrusion GmbH, 33378 Rheda-Wiedenbrück (DE)
(72) Inventor: Knack, Ingo, 21493 Schwarzenbek (DE)
(74) Representative: Teipel, Stephan

(57) **Abstract**

The present invention relates to a geogrid, a non-woven or woven fabric and a strapping band, methods for their preparation and their use.

## Description

The present invention relates to a geogrid, a non-woven or woven fabric and a strapping band, methods for their preparation and their use.

"Geosynthetics" is a term used to describe a range of generally polymeric products used to solve civil engineering problems. The term is generally regarded to encompass seven main product categories: geotextiles, geogrids, geonets, geomembranes, geosynthetic clay liners, geofoam and geocomposites. The polymeric nature of the products makes them suitable for use in ground where high levels of durability are required. Geosynthetics are available in a wide range of forms and materials, each to suit a slightly different end use.

Geotextiles form one of the two largest groups of geosynthetic materials. They are indeed textiles in the traditional sense, but consist of synthetic fibers (typically polymer-based) rather than natural fibers such as cotton, wool, jute or silk. Thus, biodegradation and subsequent short lifetime is not a problem. These synthetic fibers are woven, i.e. made into flexible, porous fabrics by standard weaving machinery, or they are matted together in a random non-woven manner. Some are also knitted. The major point is that the geotextiles are porous to liquid flow across their manufactured plain and also within their thickness, but to a widely varying degree. There is a large scope of specific application areas for geotextiles that have been developed, whereby the four main functions of the geotextiles are: separation, reinforcement, filtration and/or drainage.

Geogrids represent a rapidly growing segment within geosynthetics. Rather than being a woven, non-woven or knitted textile fabric, geogrids are polymers formed into a very open, grid-like configuration. The openings between the adjacent sets of longitudinal and transversal ribs, called "apertures", are large enough to allow for soil strike-through from one side of the geogrid to the other. The ribs (referred to herein as "strings") of the geogrid can be flexible or quite stiff compared to the fibers of geotextiles. Geogrids typically are either stretched in one or two directions for improved physical properties in this direction, made on weaving or knitting machinery by standard textile manufacturing methods, or by bonding rods (strings) together which are typically arranged in warp and weft directions to intersect with one another. Not only the strength of the ribs (strings) is important, but also the junction strength. The reason for this is that in anchorage situations the soil strike-through within the apertures bears against the transverse ribs, which transmits the load to the longitudinal ribs via the junctions. The junctions are, where the longitudinal and transversal ribs meet. These junctions are sometimes called "nodes".

EP 0 773 311 A1 discloses a geogrid made of PET and polyolefin bicomponent fibers and a process for the preparation thereof.

WO 2005/064061 discloses a geogrid composed of fiber-reinforced polymeric strings and a method for producing the same. The applied polymer is a thermoplastic polymer resin, which is fiber-reinforced in order to improve tensile strength, tensile strain and creep strain.

Known geogrids are typically made from polypropylene (PP) strings, polypropylene coated polyester fibers or polyester yarn. While polyolefins, in particular polypropylene and polyethylene, are less costly, polyesters typically have a higher maximum tensile strength and lower tensile creep. Maximum tensile strength relates to the short term strength of the geogrid, whereas tensile creep considers the long term resistance of the geogrid to tensile forces below the maximum tensile strength. Low tensile creep is of particular importance as the creep and thus elongation of the geogrid leads to long term loss of its fortification purpose, which may result in damage or destruction of the fortified structure.

Steel and plastic strapping bands (sometimes referred to in the art as simply "strapping" or "strap") are used for a wide variety of applications, typically packaging applications, such as to secure bulky goods, paperboard containers or palletised boxes. Steel strapping bands have the advantages that they have high strength and temperature resistance and outstanding creep resistance. Steel strapping bands are typically used on heavy load were high strap strength and low creep properties are required. However, steel strapping bands are difficult to dispose, are expensive and can have sharp edges. Plastic strapping bands have found particular application in lower strength packaging requirements and represent a less expensive alternative to steel strapping bands. Plastic strapping bands typically have an elastic behaviour within limits which allow the strapping bands to remain tight on the package even if the package collapses or somewhat consolidates. Plastic strapping bands do not present sharp edges, which is a further advantage. Plastic strapping bands are typically made from an extruded strand or sheet, and are typically stretched or oriented in order to increase the strength. However, these plastic strapping bands are significantly limited with regard to tensile creep. When the use of a plastic strapping band is intended and a low tensile creep is necessary, typically polyester strapping bands have to be applied. However, polyesters are more expensive than polyolefins, in particular polyethylene or polypropylene, and polyester strapping bands have the disadvantage of being rather rigid when the strapping band is to be discarded after use.

Thus, there is a need in the art for geosynthetics, in particular geogrids (also referred to herein as "geogrid fabric") and woven or non-woven fabrics, as well as strapping bands, which substantially comprise polyolefins as their main component, but provide mechanical properties, in particular a low tensile creep, comparable with those of products substantially made from more rigid materials, such as polyesters.

It has now surprisingly been found that the mechanical properties of a geosynthetic made of polyolefin fibers or strings, in particular of fibers or strings of polypropylene, polyethylene, copolymers and polymer blends thereof, can be improved by subjecting the geosynthetic to ionizing radiation. Thereby in particular the inter-fiber or inter-string adhesion, e.g. at the junctions of a geogrid or the crossovers of the individual fibers in a fabric, can be improved, in particular in regard to tensile creep. With fibers or strings made of polypropylene, as it is used in known geosynthetics, like geogrids or non-woven or woven fabrics, the ionizing radiation treatment leads to destruction of the polymer fibers. Thus, when known geosynthetics made of polypropylene are subjected to ionizing radiation, the mechanical properties of said geosynthetics are deteriorated. It has surprisingly been found that, when a crosslinking agent is added to the polypropylene, ionizing radiation not only leads to significant crosslinking of the polypropylene fibers or strings, but also the junctions of geogrids or crossovers of individual polypropylene fibers in non-woven or woven fabrics are significantly stabilized. The obtained geosynthetics therefore have significantly improved mechanical properties, in particular in regard to tensile creep.

Thus, the present invention relates to a geogrid fabric, said fabric comprising a heat bonded grid of polymer strings, which polymer substantially comprises polypropylene (PP), or are copolymer of polypropylene or polymer blend comprising polypropylene as one polymer and a crosslinking agent. Alternatively, the polymer substantially comprises polyethylene (PE), or a copolymer of polyethylene or polymer blend comprising polyethylene as one polymer. The geogrid fabric according to the present invention has a significantly improved tensile creep and/or a lower tensile creep strain (deformation) compared to geogrids made of the corresponding material, which has not been subjected to ionizing radiation. In particular, the geogrid fabric has a tensile creep strain, determined according to DIN EN ISO 13431 at 20°C, of less than 10%, more preferred less than 8%, even more preferred less than 7%, in particular less than 6%, when a constant load of about 45%, more preferred about 50%, of the maximum tensile strength of the geogrid fabric, determined according to DIN EN ISO 10319 at 20°C, is applied for about 1000 hours.

Alternatively or additionally, the geogrid of the present invention has a tensile creep rupture strength, determined according to DIN EN ISO 13431 at 20°C, at extrapolation to about 120 years of at least 40%, preferably at least 50%, more preferably at least 60%, in particular at least 65% of the maximum tensile strength of the geogrid fabric, determined according to DIN EN ISO 10319 at 20°C. Preferably, the geogrid fabric according to the present invention preferably has both the tensile creep strain and the tensile creep rupture strength as defined above. The tensile creep rupture strength, determined according to DIN EN ISO 13431, at extrapolation to about 120 years, is determined from the plot of load against the logarithm of time (according to DIN EN ISO 13431) by extrapolation to about 120 years, preferably with a confidence limit of 95%.

Preferably, the geogrid fabric has a tensile strength of at least 50 kN/m, preferably at least 60 kN/m, more preferably at least 80 kN/m, in particular at least 100 kN/m, e.g. at least 120 kN/m md (machine direction) and cmd (cross machine direction), determined according to DIN EN ISO 10319 at 20°C, when the mass unit per area of the geogrid fabric is about 200 g/m², determined according to DIN EN ISO 9864.

In a preferred embodiment the geogrid fabric according to the present invention has an elongation (also referred to in the art as "strain") at maximum load lower than 12%, preferably lower than 10%, more preferably lower than 8%, in particular lower than 7%, e.g. lower than 6%, determined according to DIN EN ISO 10319. The elongation at maximum load of the geogrid fabric is typically equal in md and cmd, thus, the geogrid fabric of the present invention preferably has the elongation at maximum load at the specified values both md and cmd.

In a further preferred embodiment of the present invention the geogrid fabric has a tensile strength at 2% elongation of at least 20 kN/m md and cmd, preferably of at least 30 kN/m md and cmd, in particular of at least 40 kN/m md and cmd, and/or a tensile strength at 5% elongation of at least 40 kN/m md and cmd, more preferably of at least 50 kN/m md and cmd, in particular of at least 60 kN/m md and cmd, determined according to DIN EN ISO 10319.

All measurements according to the standards as described herein, in particular according to DIN EN ISO 13431, DIN EN ISO 10319, or DIN EN ISO 9864 are typically conducted at 20°C on the dry geosynthetics, including woven or non-woven fabrics and geogrid fabrics, in a corresponding manner such that the conditions and specimen dimensions are as described in the standards, in particular as described in DIN EN ISO 10319. In case the respective standard, in particular DIN EN ISO 10319, requires measurement conditions differing from those as described herein, the conditions as described in the respective standard are to be applied.

The "products" or "products according to the present invention" as referred to herein comprise geogrid fabrics according to the present invention, the non-woven or woven fabrics according to the present invention as well as the strapping bands according to the present invention.

The present invention further relates to a method for the preparation of a geogrid fabric, in particular a geogrid fabric as described above, comprising the steps of
a) preparing a lattice of polymer strings, which polymer substantially comprises polypropylene (PP) or a copolymer of polypropylene or polymer blend comprising polypropylene as one polymer, and a crosslinking agent; or which polymer substantially comprises polyethylene (PE), or a copolymer of polyethylene or polymer blend comprising polyethylene as one polymer,
b) heat bonding the crossovers of the strings in the lattice obtained in step a) to obtain a grid, and
c) subjecting the grid obtained in step b) to ionizing radiation.

The polymer strings, i.e. the lateral and longitudinal strips or rods, which are applied for preparing the lattice, can be prepared as known in the art, typically by extrusion-elongation in the desired shape. Preferably the strings have a width of about 5 mm to about 50 mm, preferably about 10 mm to about 30 mm and a thickness of about 0.5 mm to about 5 mm, preferably a thickness of about 0.8 mm to about 2 mm, e.g. about 0.8 mm to about 1.5 mm. The strings are typically, after optional sizing, arranged in a flat lattice shape. The distance of the strings in the grid typically is about 3 cm to about 15 cm, preferably about 5 cm. The strings are typically arranged in warp and weft directions to intersect with one another. The crossovers of the strings, which form the junctions of the grid, are heat bonded (in step b)) to obtain the grid. Heat bonding is conducted as known in the art, e.g. by frictional heat, ultrasonic heat, laser or any suitable heat source. During heat bonding of the crossovers of the strings, the temperature of the polymer in the strings at the crossovers is typically increased up to the softening point, and even up to or over the melt point of the polymer, and the strings are pressed together in order to provide a sufficiently stable junction. Thereby, a thermoplastic linkage is formed having defined mechanical properties, in particular a defined bond strength.

The grid obtained by heat bonding the crossovers of the strings is subjected to ionizing radiation (in step c)). By subjecting the grid to ionizing radiation, the strings, in particular the polymer comprising polypropylene including the crosslinking agent, or polyethylene, or copolymers or polymer blends thereof, are crosslinked. This crosslinking also occurs at the junctions of the grid. This leads to a significant improvement of the mechanical properties of the strings and of the geogrid fabric, in particular in regard to tensile creep of the grid.

In the method for the preparation of a geogrid fabric as described above, if the polymer substantially comprises polypropylene, or a copolymer of polypropylene or polymer blend comprising polypropylene as one polymer, and a crosslinking agent, the radiation dose is preferably about 1 to about 40 kGy. When the polymer substantially comprises polyethylene, a copolymer of polyethylene or polymer blend comprising polyethylene as one polymer, the radiation dose is preferably about 1 to about 200 kGy, preferably about 50 to about 200 kGy.

In one embodiment the geogrid fabric according to the present invention is a flexible, textile-like geogrid fabric, wherein the strings are composed of bundles of polymer fibers. The polymer of said textile-like geogrid fabric is as described above. These flexible geogrids can be prepared like geogrids, wherein the strings comprise bundles of polyester fibers which are known in the art. Thus, the geogrid fabric according to the present invention can be prepared by gathering continuous polymer fibers together to form yarns which are woven into longitudinal and transversal ribs with open spaces between. The preferred dimensions of these flexible geogrids are as those described above for geogrid fabrics made from strings. The crossovers of these woven geogrids can be joined by heat bonding as described above, or alternatively by knitting or intertwining. Optionally, these woven geogrids or the geogrid fabrics made from strings as described above can be protected by a subsequent coating, e.g. by bitumen, latex or PVC. The flexible, textile-like geogrid fabric according to the present invention is also obtainable by a corresponding method as described above, wherein the geogrid after preparation is subjected to ionizing radiation as describe above.

The present invention further relates to non-woven or woven fabrics comprising polymer fibers, which polymer substantially comprises polypropylene, or a copolymer of polypropylene or polymer blend comprising polypropylene as one polymer, and a crosslinking agent; or which polymer substantially comprises polyethylene, or a copolymer of polyethylene or polymer blend comprising polyethylene as one polymer. The non-woven or woven fabric according to the present invention has a reduced creep strain (deformation) compared to non-woven or woven fabric, made from the corresponding material, which have not been subjected to ionizing radiation. The tensile creep strain, determined according to DIN EN ISO 13431, of the non-woven or woven fabrics according to the present application is less than 10%, preferably less than 8%, more preferably less than 7%, in particular less than 6%, when a constant load of about 45%, preferably of about 50% of the maximum tensile strength of the fabric, determined according to DIN EN ISO 10319 at 20°C, is applied for about 1000 hours.

The non-woven or woven fabric according to the present invention preferably has a tensile strength of at least 10 kN/m md (machine direction) and of at least 15 kN/m cmd (cross machine direction) determined according to DIN EN ISO 10319 at 20°C, when the mass unit per area of the fabric is about 150 g/m², determined according to DIN EN ISO 9864. More preferred, the non-woven or woven fabric has a tensile strength of at least 15 kN/m md and even more preferably of at least 20 kN/m md, in particular of at least 25 kN/m md, and/or preferably of at least 20 kN/m cmd, more preferably of at least 25 kN/m cmd, in particular of at least 30 kN/m cmd, determined according to DIN EN ISO 10319 at 20°C, when the mass unit per area of fabric is about 150 g/m², preferably about 120 g/m², determined according to DIN EN ISO 9864.

In a preferred embodiment the non-woven or woven fabric according to the present invention has a push-through force of at least 1700 N, preferably of at least 2000 N, more preferably of at least 3000 N, in particular of at least 5000 N, e.g. of at least 10000 N, determined according to DIN EN ISO 12236. Preferably, the non-woven or woven fabric according to the present invention has a push-through displacement lower than 30 mm, more preferably lower than 25 mm, in particular lower than 20 mm, determined according to DIN EN ISO 12236. The mentioned push-through forces and push-through displacements are preferably from a non-woven or woven fabric having a mass unit per area of the fabric of about 150 g/m², more preferably of about 120 g/m², determined according to DIN EN ISO 9864. In a preferred embodiment the non-woven or woven fabric has an elongation at maximum load lower than 50% md, preferably lower than 40% md, in particular lower than 30% md, and/or lower than 40% cmd, more preferably lower than 30% cmd, in particular lower than 20% cmd, determined according to DIN EN ISO 10319 at 20°C.

The present invention further relates to a method for the preparation of a non-woven or woven fabric, in particular non-woven or woven fabric as described above, comprising the steps of
a) preparing a sheet of polymer fibers, which polymer substantially comprises polypropylene, or a copolymer of polypropylene or polymer blend comprising polypropylene as one polymer, and a crosslinking agent; or which polymer substantially comprises polyethylene, or a copolymer of polyethylene or polymer blend comprising polyethylene as one polymer, and
b) subjecting the sheet obtained in step a) to ionizing radiation.

The preparation of a sheet of polymer fibers, which is subjected to ionizing radiation, can be conducted as known in the art. In particular, the sheet can be prepared following the well-known processes of the preparation of spun-bond non-woven fabrics. In this process the fibers are spread to form directly a fiber web and are calendered so as to obtain the non-woven fabric. In a typical spun-bonding process, the polymer is heated in an extruder to the melting point of the polyolefin composition and then the molten polyolefin composition is pumped under pressure through a spinneret containing a number of orifices of desired diameter, thereby producing filaments (fibers) of the molten polymer composition, optionally without subjecting the filament to a subsequent drawing. The equipment may include an extruder with a die on its spinning head, a cooling tower, and an air suction gathering device that optionally uses venture tubes. Underneath this device air can be applied to control the filament speed. The filaments are usually gathered over a conveyer belt, where they are distributed forming a web according to the well-known methods. Alternatively the sheet can be obtained by known processes for the preparation of needle-punched fabrics or stacked-fiber non-woven fabrics. As a further alternative the sheet can be obtained by known methods to form woven sheets of polymer fibers, e.g. by known methods using weaving machinery.

The non-woven or woven fabric according to the present invention can be a spun-bond fabric, a needle-punched fabric or a stacked fiber non-woven fabric. The fabric can be a monolayer or a multilayer fabric. The multilayer fabric can be prepared by a monolayer of the fabric according to the present invention, to which one or more layers of non-woven fabric as known in the art is applied. Preferably, the multilayer fabric substantially comprises, more preferably consists only of fabrics, in particular non-woven fabrics, according to the present invention.

In the method for the preparation of a non-woven or woven fabric, if the polymer substantially comprises polypropylene, or a copolymer of polypropylene or polymer blend comprising polypropylene as one polymer, and a crosslinking agent, the radiation dose is preferably about 1 to about 40 kGy. When the polymer substantially comprises polyethylene, a copolymer of polyethylene or polymer blend comprising polyethylene as one polymer, the radiation dose is preferably about 1 to about 200 kGy, preferably about 50 to about 200 kGy.

Further, it has been surprisingly found that also the mechanical properties of a strapping band made of polyolefin, in particular made of polypropylene, polyethylene, copolymers and polymer blends thereof, can be improved by subjecting the strapping band to ionizing radiation. Thereby, in particular the tensile creep of the strapping band is reduced while other mechanical properties, like maximum tensile strength or elongation at brake substantially stay unaffected. With strapping bands made of polypropylene, as known in the art, the ionizing radiation treatment leads to destruction of the polymer. Thus, when strapping bands made of polypropylene are subjected to ionizing radiation, the mechanical properties of said bands are deteriorated. It has been surprisingly found that, when a crosslinking agent is added to the polypropylene, ionizing radiation leads to significant crosslinking of the polypropylene, which leads to the above described improved mechanical properties, in particular in regard to tensile creep.

The present invention therefore also relates to a strapping band, said strapping band comprising a polymer, which polymer substantially comprises polypropylene, or a copolymer of polypropylene or a polymer blend comprising polypropylene as one polymer, and a crosslinking agent. Alternatively, the polymer substantially comprises polyethylene, or a copolymer of polyethylene or a polymer blend comprising polyethylene as one polymer. The strapping band according to the present invention has a significantly improved tensile creep compared to known strapping bands made of the corresponding material, which has not been subjected to ionizing radiation. In particular, the strapping band has a tensile creep strength of less than 20%, more preferably less than 18%, even more preferred less than 16%, in particular less than 14%, e.g. less than 12% or less than 10%, when a constant load of about 45%, more preferred about 50%, of the maximum tensile strength of the strapping band is applied for about 1000 hours. The tensile creep strain (elongation) and the maximum tensile strength of the strapping band can be determined according to DIN EN 13394.

In a preferred embodiment the strapping band of the present invention has the mechanical property of a polypropylene strapping band type II, more preferred type I, according to DIN EN 13394. Thus, the strapping band according to the present applications preferably has a tensile strength of at least 300 MPa at an elongation of about 15% to about 25%, more preferably a tensile strength of at least 330 MPa at an elongation of about 12% to about 20%, determined according to DIN EN 13394. Preferably, a strapping band according to the present application has the minimum tensile strength according to DIN EN 13394 of polypropylene strapping bands. Typically the strapping bands have the dimensions of strapping bands known in the art, and are typically within a width of about 5 mm to about 20 mm and a thickness of about 0.2 mm to about 1 mm.

The present invention further relates to a method for the preparation of a strapping band comprising the steps of
a) preparing a polymer band, which polymer substantially comprises polypropylene, or a copolymer of polypropylene or a polymer blend comprising polypropylene as one polymer, and a crosslinking agent; or which polymer substantially comprises polyethylene, or a copolymer of polyethylene or a polymer blend comprising polyethylene as one polymer, and
b) subjecting the band obtained in step a) to ionizing radiation.

The preparation of the polymer band, which is subjected to ionizing radiation can be conducted as known in the art. In particular, strapping bands can be made by extrusion of a polymer into a band or a sheet, where the band is cut off afterwards. Typically, the polymeric material is oriented and/or stretched after extrusion, which typically increases the strength of the polymeric material up to approximately ten-times of the unoriented strength of the material.

In the method for the preparation of a strapping band, if the polymer substantially comprises polypropylene, or a copolymer of polypropylene or a polymer blend comprising polypropylene as one polymer, and a crosslinking agent, the radiation dose is preferably about 1 to about 40 kGy. When the polymer substantially comprises polyethylene, or a copolymer of polyethylene or a polymer blend comprising polyethylene as one polymer, the radiation dose is preferably about 1 to about 200 kGy, preferably about 50 to about 200 kGy.

The ionizing radiation as used in the methods for the preparation of the products according to the present invention is preferably beta- or gamma-ray radiation. The beta-ray and gamma-ray treatment is carried out by means of irradiation procedures known in the art. Beta-rays, also known as electron beams, can be generated by electron accelerators generally known in the art. Gamma-rays used in industrial applications can be generated by radioactive conversion of cobalt 60 (⁶⁰Co) to nickel 60 (⁶⁰Ni). The gamma-rays generated by this radioactive conversion have a high penetration depth. The typical time of irradiation with beta-rays is generally within seconds, the time of irradiation with gamma-rays is typically up to hours.

One parameter of the polymer used in the products according to the present invention is the MFI (melt flow index) value, also designated as melt flow rate (MFR). The MFI value of the polymer is measured according to DIN EN ISO 1133. According to this definition the standard measurement conditions for measuring the MFI are 190°C / 2.16 kg for polyethylene and 230°C / 2.16 kg for polypropylene. The unit for the MFI is g/10 min and it is measured by means of a capillary rheometer, whereby the material, i.e. the polymer, is melted in a cylinder form and pressed through a defined nozzle with a certain pressure. Then the emerged mass of polymer melt is detected as a function of time.

By treatment with ionizing radiation the properties of the polymer string, band or fiber of the geogrid fabric, non-woven or woven fabric or strapping band according to the present invention are altered. For example, the MFI value of the strings, bands or fibers depending on the polymer used for the preparation, is increased or decreased. For example in case of polypropylene without crosslinking agent, the MFI is increased due to bond-cleavage of the polymer chain, while in case of polyethylene the MFI is decreased by crosslinking of the polymer. A combination of the polypropylene and the crosslinking agent leads on the one hand to a bond cleavage of the polymer chain and on the other hand to a crosslinking of the polypropylene, whereby in total the MFI can be decreased, depending on the total radiation dose applied and the amount of crosslinking agent present. Suitable compounds and amounts of crosslinking agents to be used are described below. By treatment with ionizing radiation, accordingly other properties of the polymer, such as the average molecular weight of the polymer and/or the molecular weight distribution of the polymer is altered and, thus, can be tailored according to the requirements of the intended use and the intended mechanical properties of the products of the present invention.

Preferred MFI values of the polymer used in the products or in the methods for the preparation of the products according to the present invention comprising polypropylene, whether as homopolymer, copolymer or polymer blend or a mixture thereof, are typically in the range from about 0.5 g/10 min to about 100 g/10 min, preferably from about 1 g/10 min to about 50 g/10 min, more preferably about 5 g/10 min to about 20 g/10 min, before subjecting the product to ionizing radiation. Preferred MFI values of the polymer used in strapping bands or in the methods for the preparation of the strapping band according to the present invention comprising polypropylene are in the range from about 0.5 g/10 min to about 20 g/10 min. After applying ionizing radiation to the polypropylene including the crosslinking agent, the MFI value of the polypropylene homopolymer, polypropylene copolymer or polymer blend thereof is preferably less than about 5 g/10 min, more preferably less than about 2 g/10 min, even more preferred less than about 1.5 g/10 min, in particular less than about 1 g/10 min, such as less than about 0.1 g/10 min, for example less than about 0.05 g/10 min or less than about 0.01 g/10 min.

If the polymer used in the products or in the methods for the preparation of the products according to the present invention is a polyethylene homopolymer, polyethylene copolymer, polymer blend comprising polyethylene as one polymer or a mixture thereof, the MFI value is typically in the range of about 0.5 g/10 min to about 100 g/10 min, preferably from about 1 g/10 min to about 50 g/10 min, more preferably about 5 g/10 min to about 20 g/10 min, before subjecting the product to ionizing radiation. Preferred MFI values of the polymer used in strapping bands or in the methods for the preparation of the strapping band according to the present invention comprising polyethylene are in the range from about 0.1 g/10 min to about 10 g/10 min, more preferably from about 0.2 g/10 min to about 8 g/10 min, in particular about 0.5 g/10 min to about 5 g/10 min, before subjecting the product to ionizing radiation. After ionizing radiation the MFI of the polyethylene homopolymer, polyethylene copolymer, polymer blend comprising polyethylene as one polymer or a mixture thereof is preferably less than about 5 g/10 min, more preferably less than about 2 g/10 min, even more preferred less than about 1.5 g/10 min, in particular less than about 1 g/10 min, such as less than about 0.1 g/10 min, for example less than about 0.05 g/10 min or less than about 0.01 g/10 min.

An appropriate range of the diameter of the polymer fiber of the woven geogrid or the non-woven or woven fabric according to the invention is from about 5 µm to about 170 µm, more preferably from about 20 µm to about 70 µm, and most preferably about 30 µm.

In one embodiment the polymer used in the products according to the present invention substantially comprises polypropylene, or a copolymer of polypropylene or polymer blend comprising polypropylene as one polymer, and a crosslinking agent. Alternatively, the polymer substantially comprises polyethylene, or a copolymer of polyethylene or polymer blend comprising polyethylene as one polymer, and no crosslinking agent. The polypropylene used can be a homopolymer, or a copolymer of polypropylene, or polymer blend comprising polypropylene as on polymer. Preferred copolymers of polypropylene are copolymers between polypropylene and a-olefins such as ethylene and 1-butene, preferably ethylene. Preferably, a polypropylene containing about 1 wt.-% to about 15 wt.-%, more preferably about 2 wt.-% to about 9 wt.-% of an a-olefin, e.g. ethylene, as a copolymer or polymer blend, and most preferably having a melt flow index of about 1 g/10 min to about 40 g/10 min, is used. In particular, random copolymers, block copolymers or polymer blends between polypropylene and polyethylene are used. The polypropylene homopolymer or copolymer may be mixed with ethylene polymer such as polyethylene, e.g. such having a melt flow index of about 1 g/10 min to about 40 g/10 min, and/or with copolymers of ethylene or polymers like propylene, vinyl acetate, acrylic acid, and ethyl acrylate. The amount of polypropylene homopolymer or copolymer is preferably about 70 wt.-% to about 100 wt.-%, more preferably about 80 wt.-% to about 95 wt.-%, such as about 85 wt.-% to about 90 wt.-% of the polymer. In one embodiment the polypropylene is an isotactic polypropylene.

In one preferred embodiment, the polypropylene is a TPE (thermoplastic elastomer) which are sometimes referred to in the art as "thermoplastic rubber", which is a class of copolymer or polymer blends which consist of materials with both thermoplastic and elastomeric properties. Preferably the TPE is a polypropylene blend with rubbers, such as polypropylene/EPDM blends (EPDM = ethylene propylene diene monomer rubber), wherein the monomer is preferably M-class (referring to the classification in ASTM Standard D-1418). Typical EPDM rubbers are DCPD (dicyclopentadiene), ENB (ethylidene norbornene) and VNB (vinyl norbornene). The typical polypropylene content in the polypropylene/EPDM blends is about 50 wt.-% to about 95 wt.-%, more preferably about 70 wt.-% to about 90 wt.-%. The typical ethylene content in the EPDM rubber is about 45 % to about 75 % by weight. The higher the ethylene content in the EPDM rubber, the higher the loading possibilities of the polymer, which leads to better mixing and extrusion. The dienes, which are typically comprised between about 2.5 wt.-% to about 12 wt.-%, preferably about 5 wt.-% to about 10 wt.-%, of the polymer blend, serve as crosslinks which provide resistance to unwanted tackiness, creep or float during end use.

In one embodiment of the present invention the polymer used in the products according to the present invention substantially comprises polyethylene, a copolymer of polyethylene or a polymer blend comprising polyethylene as one polymer. Polyethylene, while typically being more resistant to chemicals than polypropylene and in particular than polyesters, normally provides insufficient mechanical properties for the typical application of geogrid fabrics, non-woven or woven fabrics or strapping bands. However, after subjecting the polyethylene to ionizing radiation, the mechanical properties of the polyethylene, in particular in regard to tensile creep, are significantly improved due to further crosslinking of the polyethylene. Further, due to crosslinking in the crossovers of the fibers or at the junctions of the polymer strings or the fibers the products are further stabilized. The polyethylene used can generally be a homopolymer, a copolymer of polyethylene or polymer blend comprising polyethylene as one polymer, or mixtures thereof. Preferably, the polyethylene is HDPE, LDPE, LLDPE, or mixtures thereof. Preferred copolymers of polyethylene are copolymers between polyethylene and α-olefins, such as propylene and 1-butene, preferably propylene. Preferably, a polyethylene containing about 1 wt.-% to about 15 wt.-%, more preferably about 2 wt.-% to about 9 wt.-% of an α-olefin, e.g. propylene, as a copolymer and most preferably having a melt flow index of about 5 g/10 min to about 20 g/10 min is used. In particular, random copolymers, block copolymers or polymer blends between ethylene and propylene are used. The polyethylene homopolymer, copolymer or polymer blend may be mixed with propylene polymer, such as polypropylene, e.g. such having a melt flow index of about 5 g/10 min to about 20 g/10 min, and/or copolymers of ethylene with polymers like propylene, vinyl acetate, acrylic acid, and ethyl acrylate. The amount of polyethylene homopolymer or copolymer is preferably about 70 wt.-% to about 100 wt.-%, more preferably about 80 wt.-% to about 95 wt.-%, such as about 85 wt.-% to about 90 wt.-% of the polymer. Most preferred the polymer is a polyethylene homopolymer.

In one preferred embodiment the polymer is a polyethylene-based TPE (thermoplastic elastomer). Preferably, the TPEs are polyethylene or polypropylene blends with rubbers, such as polyethylene/EPDM blends or polypropylene/EPDM blends (EPDM = ethylene propylene diene monomer rubber), wherein the monomer is preferably M-class (referring to the classification in ASTM Standard D-1418). Typical EPDM rubbers are DCPD (dicyclopentadiene), ENB (ethylidene norbornene) and VNB (vinyl norbornene). The typical polyethylene content in the polyethylene/EPDM blends is about 50 wt.-% to about 95 wt.-%, more preferably about 70 wt.-% to about 90 wt.-%. The typical ethylene content in the EPDM rubber is about 45 wt.-% to about 75 wt.-%, preferably about 55 wt.-% to about 70 wt.-%. The higher the ethylene content, the higher the loading possibilities of the polymer, which leads to better mixing and extrusion. The dienes, which are typically comprised between about 2.5 wt.-% to about 12 wt.-%, preferably about 5 wt.-% to about 10 wt.-%, of the polymer blend, serve as crosslinks which provide resistance to unwanted tackiness, creep or float during end use.

In a further preferred embodiment the polyethylene is HDPE, LDPE, LLDPE, or mixtures thereof. Preferably HDPE, LDPE or LLDPE are used in the above described polymer blends. Alternatively the polymer blends can be a polyethylene/EVA (ethylene vinyl acetate) copolymer. Typically, the content of the vinyl acetate in the EVA is about 5 wt.-% to about 45 wt.-%, preferably about 10 wt.-% to about 40 wt.-%, with the remainder preferably being ethylene. EVA based copolymers have advantageous elastomeric properties, and yet can be processed like other thermoplastics.

In one embodiment the products of the present invention do not comprise a significant amount of a polyethylene terephthalate (PET) or of a polyester, in particular no polyester fibers. Most preferred the geogrid fabric, the non-woven or woven fabric and/or the strapping band according to the present invention substantially comprise, in particular substantially consist of polyolefins, in particular the polyethylene polymers and polypropylene polymers as described herein.

The term "substantially comprises" as used herein means that the amount of the respective components is at least 80 wt.-%, more preferably at least 90 wt.-%, in particular at least 95 wt.-%, e.g. at least 99 wt.-% based on the total weight of the respective composition. In one preferred embodiment the polymer used in the products according to the present invention consists of polypropylene and the crosslinking agent, or polyethylene, or a copolymer or polymer blend thereof, respectively, as the only polymeric component.

The polymer used in the products of the present invention can contain further polymers as well as additives and/or peroxides known in the art, such as colourants, pigments, opacifiers, fillers, stabilizers, flame retardants, antiacids, whiteners glidents, spinning additives, functional copolymers, low molecular weight polypropylene, polypropylene waxes, atactic polypropylene, reactive components, thermostabilizers and/or UV stabilizers. The additives can be selected by a person skilled in the art according to the specific requirements of the products, their preparation as well as the intended use of the products.

In a preferred embodiment the polymer comprises known metal activators, e.g. metal activators comprising redox-active transition metal ions like Fe²⁺/Fe³⁺, Co²⁺/Co³⁺, Cu⁺/Cu²⁺, Cr²⁺/Cr³⁺, or Mn²⁺/Mn³⁺/Mn⁴⁺, such as CuO. Typically the polymer comprises the metal activator in an amount of about 0.001 wt.-% to about 1 wt.-%, preferably in an amount of about 0.01 wt.-% to about 0.5 wt.-%, based on the total weight of the polymer. It has been found that when metal activators are present in the polymer the efficacy of the ionizing radiation is increased. Thus, the presence of metal activators is advantageous as less radiation is necessary in order to provide a sufficient crosslinking of the polyethylene polymer.

In one embodiment the polymer used in the preparation of the products of the present invention comprises a crosslinking agent. The crosslinking agent to be used with the polymer, in particular with the polypropylene, as described above typically is a triacrylate or trimethacrylate of an aliphatic polyhydric alcohol. Specific compounds suitable as crosslinking agent include, for example, trimethylol propane triacrylate, trimethylol propane trimethacrylate, trimethylol ethane triacrylate and tetramethylol methane triacrylate. Particularly preferable are trimethylol propane triacrylate and trimethylol propane trimethacrylate. The crosslinking agent is typically present in an amount of about 0.5 wt.-% to about 4 wt.-%, based on the total weight of the polymer. Trimethylol propane triacrylate and trimethylol propane trimethacrylate are highly compatible with polypropylene and polyethylene and exhibit a high crosslinking effect. Most preferably, the amount of crosslinking agent ranges between about 1.0 wt.-% to about 2.5 wt.-%, based on the weight of the polymer. Derivatives of phenolic compounds may additionally be used, such as those compounds disclosed in US 4,367,185, to enhance the crosslinking effect. The amount of the phenolic compound derivative typically is in the range from 0.01 wt.-% to 5.0 wt.-% based on the weight of the polymer.

In one embodiment the polymer used in the preparation of the products of the present invention comprises a silane(-based) crosslinking agent. Typical silane crosslinking agents are known in the art. Non-limiting examples of suitable silane crosslinking agents include unsaturated silanes that comprise an ethylenically unsaturated hydrocarbyl group, such as vinyl, allyl, isopropenyl, butenyl, cyclohexenyl or gamma-(meth)acryloxy allyl group, and a hydrolysable group such as a hydrocarbyloxy, hydrocarbonyloxy, and hydrocarbylamino group. In another embodiment the silanes are unsaturated alkoxy silanes which can be grafted onto the polymer. Examples of suitable silane crosslinking agents are vinyl trimethoxy silane, vinyltriethoxysilane, vinyltris(2-methoxyethoxy)silane, vinyltriacetoxysilane, vinylmethyldimethoxysilane, 3-methacryloyloxypropyltrimethoxysilane, and combinations thereof. The amount of silane crosslinking agent is typically in the range of about 0.1 wt.-% to about 1 wt.-%, preferably about 0.5 wt.-% to about 1 wt.-%, based on the total weight of the polymer. While the above mentioned crosslinking agents as well as silicone based crosslinking agents described herein can be excellently combined with crosslinking by ionizing radiation as described herein, it has been found that crosslinking by peroxides as known in the art cannot suitably be applied for the manufacture of crosslinked polymer fibers.

The products according to the present invention show improved mechanical properties, in particular in regard to tensile creep strength. In particular, it has been surprisingly found that the maximum tensile strength of the products comprising polyethylene and polypropylene polymers as described above is not significantly influenced when the polymer is subjected to ionizing radiation as described above, however, the tensile creep strain of the products is significantly reduced. This can be explained by an additional crosslinking between the polymer fibers due to the ionizing radiation treatment. Without willing to be bound by theory it is believed that short term tensile strength is influenced by the general orientation of the chains in the polymer, while tensile creep strength as long term measurement is more influenced by the interchain binding forces. When the polymer is polypropylene, the crosslinking is enabled due to the additional crosslinking agent present. In case the polymer is polyethylene, no crosslinking agent is necessary.

A further advantage of using polyethylene, in particular with the fabrics of the present invention as described above, is that polyethylene typically has a better chemical resistance, in particular better resistance to acidic and basic environment compared to other polymers, in particular polyesters. Consequently, a geogrid fabric or non-woven or woven fabric prepared from polyethylene shows an improved chemical resistance compared to known products made from other polymers.

The non-woven or woven fabrics according to the present invention comprising polyolefin fibers, in particular fibers from polyethylene, polypropylene or the respective copolymers or polymers as described above, which have been subjected to an ionizing radiation treatment, show an excellent temperature resistance and chemical resistance, in particular against acids and bases. It has been found that said non-woven or woven fabrics can advantageously be applied for filtration of, optionally, hot liquids or gases, where additional chemical resistance is necessary or desired. Known filters from thermoplastic polymer fibers, which have not been subjected to ionizing radiation treatment, typically cannot be applied for said filtration purposes. Thus, the present invention also relates to the use of a non-woven or woven fabric as described above for filtration of liquids or gases, optionally under increased temperature, such as higher than 80°C, more preferably higher than 100°C, in particular higher than 120°C, under acidic, basic and/or oxidizing conditions, e.g. a pH of about 2 to 12, in particular in an oxidizing atmosphere.

The present invention further relates to a geogrid fabric, obtainable by a method as described above.

Further the present invention relates to a non-woven or woven fabric, which is obtainable by a method as described above.

Further, the present invention relates to a strapping band, which is obtainable by a method as described above.

The present invention also relates to the use of a geogrid fabric as described above in the field of civil engineering, in particular for reinforcement, e.g. for reinforcement of soils for walls, steep slopes, roadway bases and foundation soils.

The present invention also relates to the use of a non-woven or woven fabric as described above in the field of civil engineering, in particular for separation, filtering, reinforcement, protection or draining.

The present invention also relates to the use of a strapping band as described above for packaging.

The present invention will now be further illustrated by the examples which are not intended to be construed as limiting.

### Examples

### Example 1 - Geogrid

Geogrids of different mass units per area were prepared by melt extrusion of polypropylene polymer into strings, preparing the lattice and heat-bonding of the strings to obtain the geogrid. 2 wt.-% of a crosslinking agent was added to the polypropylene before extrusion.

The general properties of the strings of three different Geogrids A, B and C in md (machine direction) and cmd (cross machine direction) before irradiation are summarized in the following tables:

**Table 1**

| **Geogrid** | | **A** | **B** | **C** | **A** | **B** | **C** |
|---|---|---|---|---|---|---|---|
| **Direction** | - | MD | MD | MD | CMD | CMD | CMD |
| **Polymer** | - | PP | PP | PP | PP | PP | PP |
| **Specific weight** | g/m³ | 0.91 | 0.91 | 0.91 | 0.91 | 0.91 | 0.91 |
| **Min. strap strength** | N | 1650 | 2250 | 3000 | 1250 | 1800 | 2400 |
| **avg. (Max.) Elongation at break** | % | < 12 (16) | < 12 (16) | < 12 (16) | < 12 (16) | < 12 (16) | < 12 (16) |
| **Min. material strength** | MPa | 350 | 350 | 350 | 350 | 350 | 350 |
| **String cross section** | mm² | 5.2 | 6.8 | 8.4 | 4.1 | 5.4 | 6.3 |

**Table 2**

| **Geogrid** | **Unit** | **A** | **B** | **C** | **measured according to** |
|---|---|---|---|---|---|
| **Polymer** | | Polypropylene | | | - |
| **opening MD/CMD** | mm/mm | 40/40 | 45/40 | 40/40 | - |
| **max. tensile strength^{[1]}** | kN/m | 25 | 35 | 45 | DIN EN ISO 10319 |
| **nominal strength^{[2]}** | kN/m | 20 | 30 | 40 | DIN EN ISO 10319 |
| **strain at nominal strength** | % | ≤8 | | | DIN EN ISO 10319 |
| **tensile strength at 5 % elongation** | kN/m | 18 | 22 | 26 | DIN EN ISO 10319 |
| **tensile strength at 2 % elongation** | kN/m | 10 | 12 | 14 | DIN EN ISO 10319 |
| **mass per area** | g/m² | 150 | 200 | 260 | DIN EN ISO 9864 |

| | | | | | |
|---|---|---|---|---|---|
| [1] mean values, MD/CMD [2] minimal strength, confidence interval 95 %, MD/CMD | | | | | |

Geogrids A, B and C have been subjected to ionizing radiation (beta-rays, 30 kGy). It has been found that the tensile creep strain as well as the tensile creep rupture strength as defined above have been improved for at least 5 % in the irradiated geogrids compared to the respective non-irradiated geogrids, independent of the total weight per area of the geogrid. The mechanical properties as listed in the tables were not significantly deteriorated by the irradiation

### Example 2 - Strapping band

A strapping band was prepared by melt-extrusion of polypropylene comprising 2 wt.-% of a crosslinking agent. The properties of the band are summarized in the following:

**Table 3**

| **strapping band** | **unit** | **D** | **E** | **F** | **according to** |
|---|---|---|---|---|---|
| polymer | | polypropylene | | | |
| specific weight | g/m³ | 0.91 | 0.91 | 0.91 | |
| colour | | clear | clear | clear | |
| with | mm | 5.8 | 11.7 | 15.5 | |
| thickness | mm | 0.65 | 0.6 | 0.8 | |
| min. strength | N | 950 | 1600 | 3800 | DIN EN ISO 13394 |
| avg. (max.) elongation at break | % | < 12 (16) | < 12 (16) | < 12 (16) | DIN EN ISO 13394 |
| min. material strength | MPa | 350 | 350 | 350 | DIN EN ISO 13394 |

The strapping bands have been subjected to ionizing radiation (beta-rays, 30 kGy).

It has been found that the tensile creep strain as well as the tensile creep rupture strength of the strapping bands D, E and F have been improved for at least 5 % in the irradiated band, compared to non-irradiated bands of the respective size and weight. The mechanical properties of the bands were not significantly deteriorated by the irradiation.

## Claims

1. A geogrid fabric, said fabric comprising a grid of heat bonded polymer strings, which polymer substantially comprises polypropylene, or a copolymer of polypropylene or polymer blend comprising polypropylene as one polymer, and a crosslinking agent, or which polymer substantially comprises a polyethylene, or a copolymer of polyethylene or polymer blend comprising polyethylene as one polymer, which geogrid fabric has
a) a tensile creep strain of less than 10%, determined according to DIN EN ISO 13431 at 20°C when a constant load of about 45% of the maximum tensile strength of the geogrid fabric, determined according to DIN EN ISO 10319 at 20°C, is applied for 1000 hours, and/or
b) a tensile creep rupture strength, determined according to DIN EN ISO 13431 at 20°C, at extrapolation to about 120 years of at least 40% of the maximum tensile strength of the geogrid fabric, determined according to DIN EN ISO 10319 at 20°C.

2. Geogrid fabric according to claim 1, which has a tensile strength of at least 50 kN/m md (machine direction) and cmd (cross machine direction) determined according to DIN EN ISO 10319 at 20°C, when the mass unit per area of the geogrid fabric is about 200 g/m², determined according to DIN EN ISO 9864, preferably a tensile strength of at least 60 kN/m, more preferable of at least 80 kN/m, most preferred of at least 100 kN/m, md and cmd, determined according to DIN EN ISO 10319 at 20°C, when the mass unit per area of the geogrid fabric is about 200 g/m², determined according to DIN EN ISO 9864.

3. Geogrid fabric according to any of claims 1 or 2, which has an elongation at maximum load lower than 12 %, preferably lower than 10 %, md and cmd, determined according to DIN EN ISO 10319 at 20°C.

4. Geogrid fabric according to any of the preceding claims, which has a tensile strength at 2% elongation of at least 20kN/m md and cmd, and/or a tensile strength at 5% elongation of at least 40 kN/m md and cmd, determined according to DIN EN ISO 10319 at 20°C.

5. A non-woven or woven fabric comprising polymer fibers, which polymer substantially comprises polypropylene, or a copolymer of polypropylene or polymer blend comprising polypropylene as one polymer, and a crosslinking agent, or which polymer substantially comprises polyethylene, or a copolymer of polyethylene or polymer blend comprising polyethylene as one polymer, which non-woven or woven fabric has a creep strain, determined according to DIN EN ISO 13431 at 20°C, of less than 10% when a constant load of about 45% of the maximum tensile strength of the fabric, determined according to DIN EN ISO 10319 at 20°C, is applied for about 1000 hours.

6. Non-woven or woven fabric according to claim 5, which fabric has a push-trough force of at least 1700 N, preferably at least 2000 N, determined according to DIN EN ISO 12236, when the mass unit per area of the fabric is about 150 g/m², determined according to DIN EN ISO 9864 and/or which fabric has a tensile strength of at least 10 kN/m md (machine direction) and of at least 15 kN/m cmd (cross machine direction) determined according to DIN EN ISO 10319 at 20°C, when the mass unit per area of the fabric is about 150 g/m², determined according to DIN EN ISO 9864.

7. Non-woven or woven fabric according to any one of claims 5 or 6, which fabric has a push-trough displacement lower than 30 mm, determined according to DIN EN ISO 12236, when the mass unit per area of the fabric is about 150 g/m², determined according to DIN EN ISO 9864.

8. A strapping band, said strapping band comprising a polymer, which polymer substantially comprises polypropylene, or a copolymer of polypropylene or polymer blend comprising polypropylene as one polymer, and a crosslinking agent, or which polymer substantially comprises polyethylene, or a copolymer of polyethylene or polymer blend comprising polyethylene as one polymer, which strapping band has a tensile creep strain of less than 20% when a constant load of about 45% of the maximum tensile strength of the strapping band is applied for about 1000 hours.

9. Strapping band according to claim 8, which has a tensile strength of at least 300 MPa at an elongation of about 15% to about 25%, determined according to DIN EN 13394.

10. Method for the preparation of a geogrid fabric, comprising the steps of
a) preparing a lattice of polymer strings, which polymer substantially comprises polypropylene, or a copolymer of polypropylene or polymer blend comprising polypropylene as one polymer, and a crosslinking agent, or which polymer substantially comprises polyethylene, or a copolymer of polyethylene or polymer blend comprising polyethylene as one polymer,
b) heat bonding the crossovers of the strings in the lattice obtained in step a), to obtain a grid and
c) subjecting the grid obtained in step b) to ionizing radiation.

11. Method for the preparation of a non-woven or woven fabric, comprising the steps of
a) preparing a sheet of polymer fibers, which polymer substantially comprises polypropylene, or a copolymer of polypropylene or polymer blend comprising polypropylene as one polymer, and a crosslinking agent, or which polymer substantially comprises polyethylene, or a copolymer of polyethylene or polymer blend comprising polyethylene as one polymer, and
b) subjecting the sheet obtained in step a) to ionizing radiation.

12. Method for the preparation of a strapping band, comprising the steps of
a) preparing a polymer band, which polymer substantially comprises polypropylene, or a copolymer of polypropylene or polymer blend comprising polypropylene as one polymer, and a crosslinking agent, or which polymer substantially comprises polyethylene, or a copolymer of polyethylene or polymer blend comprising polyethylene as one polymer, and
b) subjecting the band obtained in step a) to ionizing radiation.

13. Method according to any of claims 8 to 12, wherein, if the polymer substantially comprises polypropylene, or a copolymer of polypropylene or polymer blend comprising polypropylene as one polymer, and a crosslinking agent, the radiation dose is about 1 to about 40 kGy, or, if the polymer substantially comprises polyethylene, or a copolymer of polyethylene or polymer blend comprising polyethylene as one polymer, the radiation dose is about 1 to about 200 kGy, preferably about 50 to about 200 kGy.

14. Geogrid fabric according to any of claims 1 to 4, non-woven or woven fabric according to any of claims 5 to 7, strapping band according to any of claims 8 or 9 and/or method according to any of claims 10 to 13, wherein the polymer is polypropylene, in particular isotactic polypropylene, or a copolymer of polypropylene or polymer blend comprising polypropylene as one polymer, in particular a polypropylene/EPDM blend.

15. Geogrid fabric according to any of claims 1 to 4, non-woven or woven fabric according to any of claims 5 to 7, strapping band according to any of claims 8 or 9 and/or method according to any of claims 10 to 13, wherein the polymer is polyethylene, HDPE, LDPE, LLDPE, TPE (thermoplastic elastomer), or EVA (ethylene vinyl acetate copolymer), or a mixture thereof.

16. Geogrid fabric, obtainable by a method according to any of claims 10, or 13 to 15.

17. Non-woven or woven fabric, obtainable by a method according to any of claims 11 I or 13 to 15.

18. Strapping band, obtainable by a method according to any of claims 12 to 15.

19. Use of a geogrid fabric according to any of claims 1 to 4 or 14 to 16 in civil engineering, in particular for reinforcement.

20. Use of a non-woven or woven fabric according to any of claims 5 to 7, 14, 15 or 17 in civil engineering, in particular for separation, filtering, reinforcement, protection or draining, or for filtration of liquids or gases under increased temperature and/or acidic, basic or oxidizing conditions.

21. Use of a strapping band according to any of claims 8, 9, 14, 15, or 18 for packaging.
